(19) Europäisches Patentamt

European Patent Office

Office européen des brevets

(11) EP 0 712 009 A1

(12) DEMANDE DE BREVET EUROPEEN

(43) Date de publication:
15.05.1996 Bulletin 1996/20

(51) Int CI.⁶: G01S 3/784

(21) Numéro de dépôt: 95402522.7

(22) Date de dépôt: 10.11.1995

(84) Etats contractants désignés:
DE GB

(30) Priorité: 10.11.1994 FR 9413550

(71) Demandeur: THOMSON-CSF
F-75008 Paris (FR)

(72) Inventeurs:
• Duboz, Jean-Yves
F-92402 Courbevoie Cedex (FR)

• Bois, Philippe
F-92402 Courbevoie Cedex (FR)

(74) Mandataire: Guérin, Michel
THOMSON-CSF
SCPI
B.P. 329
50, rue Jean-Pierre Timbaud
F-92402 Courbevoie Cédex (FR)

(54) Ecartomètre intégré

(57) L'invention concerne un écartomètre intégré permettant de déterminer la direction d'un faisceau lumineux et notamment un faisceau laser. Cet écartomètre comprend un substrat (S) transparent au faisceau lumineux, en face arrière des moyens permettant de ca- naliser une partie du flux lumineux reçu sur cette face, vers la face avant qui possède plusieurs éléments de photodétection.

Applications : Mesures optiques

FIG.3

# Description

Le domaine de l'invention est celui des écartomètres, dispositifs permettant de déterminer la direction d'un faisceau lumineux, et notamment un faisceau laser. Ces dispositifs sont utilisés fréquemment dans des applications en optique, ou dans des réglages pour mesures optiques, dès lors que l'on cherche à localiser ou à aligner un faisceau lumineux.

Il existe à l'heure actuelle, différents types d'écartomètres, de structure hybride, comprenant d'une part un substrat avec une zone de photodétection, d'autre part associé au substrat, ou rapportés au substrat des moyens pour diriger le faisceau lumineux vers la zone de photodétection.

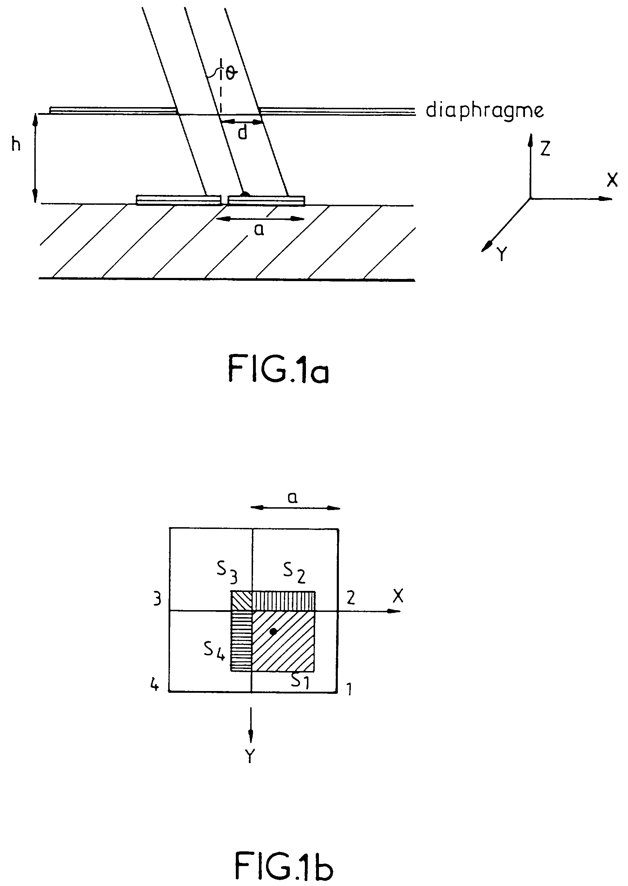

Ces moyens peuvent notamment consister à insérer un diaphragme devant un photodétecteur muni de plusieurs éléments de photodétection (quatre de préférence) et à mesurer la réponse sur chaque élément détecteur. La figure 1 illustre ce type de dispositif selon l'art connu, dans lequel le diaphragme est centré au milieu du détecteur. Suivant l'angle d'incidence du faisceau lumineux, les éléments détecteurs sont éclairés différemment et la comparaison des réponses sur les différents éléments détecteurs donne l'angle d'incidence recherché. En effet, comme le montrent les figures 1a et 1b, il est possible de déterminer l'angle $\theta$, à partir de la distance h définie entre le diaphragme et les détecteurs élémentaires, des dimensions de l'ouverture du diaphragme (par exemple un carré de côté d) et des dimensions des photodétecteurs (par exemple carré de côté a). La figure 1b schématise l'image du diaphragme sur l'ensemble de quatre détecteurs, illuminé par le faisceau lumineux d'incidence $\theta$. Les courants mesurés $i_1$, $i_2$, $i_3$, $i_4$ correspondant respectivement aux photodétecteurs 1, 2, 3 et 4 permettent la détermination des surfaces $S_1$, $S_2$, $S_3$, $S_4$ et donc la détermination des paramètres (xo, yo) correspondant au centre de l'image du diaphragme sur la surface de photodétection. A partir de ces coordonnées on peut aisément définir grâce aux équations :

$$xo/h = tg\theta_1$$
$$yo/h = th\theta_2$$

Les deux directions $\theta_1$ et $\theta_2$ du faisceau lumineux selon les axes Z et Y définis en figure 1.

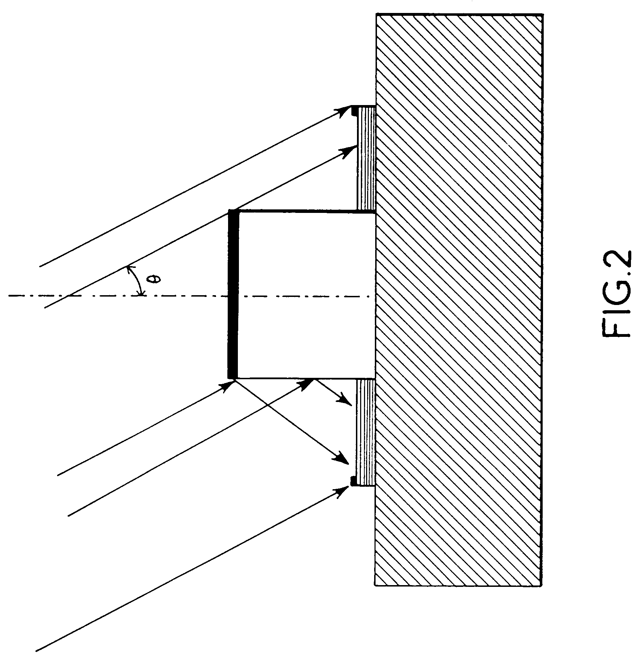

Selon l'art antérieur, il est également possible de concevoir un écartomètre, en accolant au substrat supportant les détecteurs élémentaires un cube présentant des parois verticales réfléchissantes comme l'illustre la figure 2. Les détecteurs élémentaires sont dans ce cas disposés autour du cube. Dans le cas de quatre pixels ceux-ci sont placés le long des faces réfléchissantes du cube. La comparaison des réponses sur les différents éléments détecteurs permet la détermination de l'angle d'incidence.

Dans ces différents cas d'écartomètre, le positionnement de la pièce externe (diaphragme ou cube) par rapport au détecteur, est un point critique. Dans le cas du diaphragme, le positionnement doit être précis latéralement et verticalement. En outre, les vibrations éventuelles, les dilatations thermiques différentes pour la pièce externe et le détecteur, affectent directement la précision du positionnement.

C'est pourquoi, l'invention propose un écartomètre intégré monolithique permettant de s'affranchir des contraintes précitées. L'écartomètre selon l'invention comprend un substrat transparent à la longueur d'onde du faisceau incident dont on cherche à déterminer la direction.

Plus précisément, l'invention a pour objet un écartomètre mesurant l'angle d'incidence d'un faisceau lumineux de longueur d'onde, caractérisé en ce qu'il comprend un substrat transparent à la longueur d'onde, en face avant du substrat une surface de photodétection intégrée audit substrat et en face arrière des moyens intégrés audit substrat pour diriger et transmettre au moins une partie du faisceau lumineux irradiant la face arrière, vers la surface de photodétection.

La surface de photodétection peut avantageusement être constituée de quatre quadrants de photodétection.

Les moyens pour diriger et transmettre le faisceau lumineux vers la surface de photodétection peuvent comprendre un diaphragme dont l'axe central coïncide avec l'axe central de la surface de photodétection.

Ces moyens peuvent également comprendre un cube dont les parois selon un axe perpendiculaire à la face arrière de l'écartomètre, sont réfléchissantes pour le faisceau lumineux, la surface de photodétection étant répartie autour d'une section correspondant à la section du cube.

L'invention sera mieux comprise et d'autres avantages apparaîtront à la lecture de la description qui va suivre, donnée à titre non limitatif, et des figures annexées par lesquelles :

- la figure 1a illustre un exemple d'écartomètre selon l'art connu, utilisant un diaphragme ;
- la figure 1b schématise l'image du diaphragme irradiée par le faisceau lumineux sur la surface de photodétection ;
- la figure 2 illustre un exemple d'écartomètre selon l'art connu, utilisant un cube à parois réfléchissantes pour le faisceau lumineux ;
- la figure 3 illustre un exemple d'écartomètre intégré, selon l'invention, comportant un diaphragme ;
- la figure 4 illustre un exemple d'écartomètre intégré, selon l'invention, comportant un cube à parois réfléchissantes.

L'écartomètre selon l'invention possède une structure intégrée, transparente à la longueur d'onde du faisceau lumineux dont on cherche à déterminer la direction d'incidence. Il comprend un substrat avec une surface de photodétection, ledit substrat étant éclairé en face arrière (la surface de photodétection étant en face avant). Le fonctionnement de ce type d'écartomètre est analogue à celui des écartomètres hybrides, généralement irradiés en face avant, seule change la valeur de l'indice optique du milieu entre la surface qui canalise le faisceau lumineux et la surface de photodétection. Si θ correspond à l'angle externe du faisceau lumineux et θint, l'angle d'incidence de ce faisceau dans le substrat d'indice n, la mesure de photodétection fournit l'angle θint et l'on peut par là-même déterminer l'angle θ puisque l'on dispose de la relation

$$n \sin \theta int = \sin \theta \qquad (1)$$

Dans une première variante selon l'invention, l'écartomètre intégré présente un diaphragme élaboré sur une des faces du substrat, la zone de photodétection étant élaborée sur l'autre face.

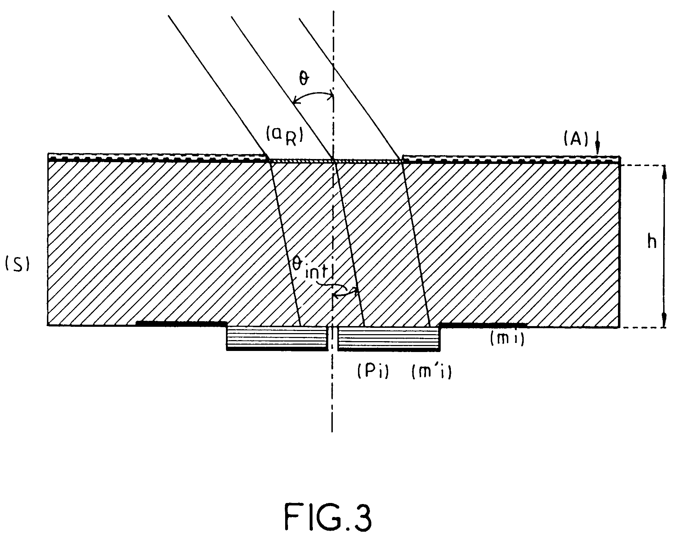

La figure 3 illustre cet exemple d'écartomètre. En face avant, la zone de photodétection est constituée de plusieurs photodétecteurs pour effectuer une mesure comparative des flux lumineux reçus sur les différents éléments photodétecteurs ($P_i$) distribués autour d'un axe central, correspondant à l'axe central du diaphragme. Des métallisations ($m_i$) et ($m_{i'}$) permettent de mesurer les courants générés par les photodétecteurs ($P_i$).

Le photodétecteur est constitué par une couche absorbante (A), son ouverture comprenant avantageusement une couche antireflet ($a_R$) pour éviter au maximum les réflexions à l'interface extérieur/substrat (S). Plus précisément, le diaphragme peut être réalisé par des techniques de microlithographie et de métallisation classiques sur la face arrière. L'alignement de la lithographie en face arrière avec les photodétecteurs fabriqués sur la face avant peut s'effectuer en lumière infrarouge dans le cas où le substrat est transparent dans l'infrarouge (très fréquent pour les semiconducteurs). L'épaisseur du substrat h peut typiquement être du même ordre de grandeur que la distance du diaphragme à la zone de photodétection dans le cas d'un écartomètre hybride, la taille utile des détecteurs élémentaires peut alors être réduite par rapport au cas hybride, en raison de la réfraction dans un milieu d'indice plus élevé.

Si θmax correspond à l'angle maximal accepté pour lequel les différents photodétecteurs peuvent recevoir du flux lumineux, la réduction $R_1$ des dimensions des détecteurs vaut :

n cosθint max/cosθ max en raison de la relation (1). Dans le cas des substrats semiconducteurs Si, GaAs, ou InP (cas les plus fréquents pour envisager de la photodétection), l'indice n est de l'ordre de 3,2, ainsi ce facteur de réduction peut typiquement être de l'ordre de 3,6 (pour θmax = 30°) voir même de l'ordre de 6 (pour θmax = 60 °).

Cette réduction de surface des photodétecteurs est particulièrement intéressante dans le cas où la fabrication de détecteurs de grande taille est rendue problématique par la présence de défauts dans le matériau.

Pour la détection d'angles très faibles et notamment dans les applications d'écartomètre monté sur goniomètre il peut être intéressant de conserver des photodétecteurs élémentaires de grande surface et d'augmenter la distance h donc d'utiliser des substrats plus épais pour gagner en sensibilité. En effet de manière générale l'angle θint est déterminé avec la même précision d θint que l'angle dθ dans le cas d'un écartomètre hybride. Par conséquent, l'incertitude dθ sur l'angle externe est augmenté d'un facteur β défini à partir de la relation n sinθint =sinθ soit donc n cosθint dθint = cosθ dθ, soit encore β=n cosθint/cosθ.

Ce facteur définit bien l'augmentation d'incertitude sur l'angle externe dans le cas intégré par rapport à celle sur l'angle externe dans le cas hybride et ce pour la même distance entre diaphragme et détecteurs.

En augmentant cette distance, jusqu'à exploiter la même surface de photodétecteurs dans les deux cas on ramène cette augmentation d'incertitude au facteur $β/R_2$ si $R_2$ est le rapport des distance diaphragme-détecteurs dans le cas écartomètre intégré et écartomètre hybride. Ce nouveau facteur $β/R_2$ est alors défini par la relation :

$β/R_2$ = (cos θint/cosθ).(cosθmax/cosθint max). Ce coefficient vaut 1 pour l'angle limite et diminue lorsque l'angle diminue. On peut ainsi dans le cas où θmax est voisin de 60° gagner un facteur 2 sur la précision de l'angle externe, dans la détermination d'angles faibles.

Dans une autre variante de l'invention, les moyens pour diriger le faisceau lumineux vers les photodétecteurs et en définir l'orientation, peuvent comprendre un cube à la surface du substrat.

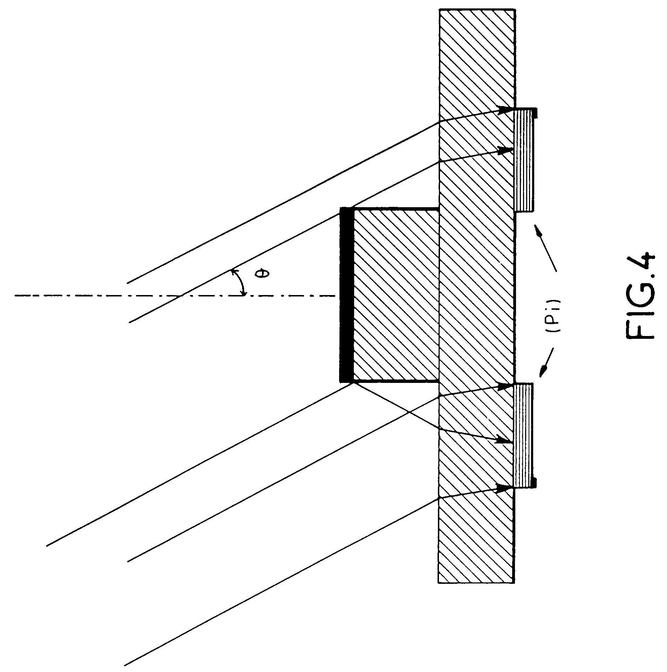

Typiquement, un substrat peut être gravé en face arrière pour délimiter le cube. Les parois verticales de ce dernier sont dans un second temps, métallisés pour permettre la réflexion du faisceau incident, au travers du substrat en direction des photodétecteurs, réalisés en face avant. Cette métallisation peut typiquement être obtenue par dépôt de métal, non directionnel, par pulvérisation notamment. Comme l'illustre la figure 4, les différents photodétecteurs sont distribués autour de l'emplacement en face avant, qui se trouve en regard du cube. La face arrière du cube est également recouverte d'une couche absorbante afin d'éviter les réflexions parasites.

Dans toutes les variantes d'écartomètre selon l'invention les photodétecteurs sont réalisés par les méthodes classiques utilisées sur les semiconducteurs. Dans le cas de substrat type GaAs, on peut élaborer entre deux couches dopées de GaAs, une structure active de photodétection, de type structure à puits quantiques. Typiquement, les différentes métallisations pourront être réalisées par dépôt d'or.

**Revendications**

1. Ecartomètre mesurant l'angle d'incidence d'un faisceau lumineux de longueur d'onde (λ), caractérisé

**EP 0 712 009 A1**

en ce qu'il comprend un substrat (S) transparent à la longueur d'onde ($\lambda$), en face avant du substrat une surface de photodétection intégrée audit substrat et en face arrière des moyens intégrés audit substrat pour diriger et transmettre au moins une partie du faisceau lumineux irradiant la face arrière, vers la surface de photodétection.

2. Ecartomètre selon la revendication 1, caractérisé en ce que la surface de photodétection est constituée de quatre quadrants de photodétection.

3. Ecartomètre selon l'une des revendications 1 ou 2, caractérisé en ce que les moyens pour transmettre et diriger le faisceau lumineux comprennent un diaphragme dont l'axe central coïncide avec l'axe central de la surface de photodétection.

4. Ecartomètre selon la revendication 3, caractérisé en ce que l'ouverture du diaphragme comprend une couche anti-reflet.

5. Ecartomètre selon l'une des revendications 1 ou 2, caractérisé en ce que les moyens pour transmettre et diriger le faisceau lumineux comprennent un cube dont les parois selon un axe perpendiculaire à la face arrière de l'écartomètre sont réfléchissantes, la surface de photodétection étant répartie autour d'une section correspondant à la section du cube.

6. Ecartomètre selon l'une des revendications 1 à 5, caractérisé en ce que le substrat (S) est en matériau semiconducteur.

FIG.1a

FIG.1b

FIG.2

EP 0 712 009 A1

θ

(a_R)

(A)

(S)

h

θ_int

(m_i)

(P_i)   (m'_i)

FIG.3

$\theta$

(Pi)

FIG.4

Office européen
des brevets

**RAPPORT DE RECHERCHE EUROPEENNE**

Numero de la demande

EP 95 40 2522

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 489 644 (IMRA EUROPE S.A.) 10 Juin 1992 | 1,3,4 | G01S3/784 |
| Y | * le document en entier * | 2,5 | |
| | --- | | |
| Y | EP-A-0 310 493 (THOMSON-CSF) 5 Avril 1989 * figures 1,3 * | 2 | |
| | --- | | |
| Y | GB-A-2 232 550 (HUGHES MICROELECTRONICS LIMITED) 12 Décembre 1990 * abrégé; figure 1 * | 5 | |
| | ----- | | |

DOMAINES TECHNIQUES RECHERCHES (Int.Cl.6)

G01S

Le présent rapport a été établi pour toutes les revendications

| Lieu de la recherche | Date d'achèvement de la recherche | Examinateur |
|---|---|---|
| LA HAYE | 7 Février 1996 | Zaccà, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant